# EUROPEAN PATENT APPLICATION

(11) **EP 1 921 347 A2**
(43) Date of publication of application: **14.05.2008**
(21) Application number: 07380298.5
(22) Date of filing: 31.10.2007
(51) Int. Cl.: F16H 25/20

(54) **Single drive actuation system with redundancies and safety device**

(30) Priority: 06.11.2006 ES 200602805
(71) Applicant: SENER, INGENIERIA Y SISTEMAS, S.A., 48930 Las Arenas Guecho (Vizcaya) (ES)
(72) Inventor: Vinals Abelan, José Javier, 48901 Barakaldo (Vizcaya) (ES); García Segovia, Ignacio, 48200 Durango (Vizcaya) (ES); Jaio Gojenola, Germán, 48993 Algorta (Vizcaya) (ES)
(74) Representative: Carvajal y Urquijo, Isabel

(57) **Abstract**

Single actuation system with redundancies and safety device, that is made up of a hollow roller screw [1]; a coaxial safety bar [2], located inside the hollow roller screw [1] and connected to this in the free edge of the same; a redundant nut [5] located in the assembly formed by the screw [1] and the safety bar [2]; a no-back device [6] located on one edge of the assembly screw [1] - safety bar [2]; a torque limiter [7], located on the bottom part of the no-back device [6]; at least two motors [8]; at least two position sensors [9]; a safety device [10] jointed solidaritily to the coaxial safety bar [2]; a main bearing system [3], jointed solidaritily to the screw [1]; a support [4] of the assembly, joint as well to the actuation system as to the element to be actuated.

## Description

### Field of the invention.

The present invention belongs to the range of electro-mechanical actuators used to move elements, in particular to those cases where the safety and redundancies are needed in order to prevent critical damage to the elements connected to them or to the components where these actuators are located. The electro-mechanical actuator here described has in addition single actuation system that allows preventing damage to adjacent and similar actuators.
Thus, the present invention may be applicable to:
- Aeronautical and space fields, in relation to those actuators used to move aerodynamic surfaces, ramps, doors, antennas, etc.
- Industrial, power, energy (solar, ...) plants, in relation to prevent overloading conditions.
- Robotics (industrial, biomedicine, telesurgery), in relation to prevent damages for malfunctions of the system.

### State of the art.

In general, the actuator is connected to a fixed part and to a moving part. In the case that the mission of these actuators are related to critical working conditions where the safety and reliability of the system is a strong requirement, it is needed to incorporate some safety devices to avoid damage to the parts joined and to the component where the actuators are mounted.

Several devices have been developed in order to avoid the disconnection of the actuator ends, as this failure can cause the breakage of any of the parts involved or the lost of the component, vehicle or system where these actuators are acting.

There are some solutions based on reaction bars joined to the actuator, other based on adjacent auxiliary structures, and additional attachments that complicate the actuator functionality (increase the maintainability, complex assembly of parts as there are more elements, no compact design solutions, require more space).

Patent EP1677011A1 described some of these solutions. The main problem of these alternatives is that the safety device is an additional attachment to the actuator system.

So forth, it is desirable to develop a safety device and redundancy issues inherent to the actuator design, having a minimum impact on the weight, on the adjacent parts, and on the installation, assembly, inspection and maintainability requirements, that also has no impact in the adjacent actuators, as many times the actuation system is composed of several actuators joined by means of a torque shaft.

### Description of the invention.

The present invention has the purpose of overcoming the problems described in the state of the art by means of an actuator that has inside (or in a compact solution) all the safety device and redundancies to assure the correct functionality in case of failure, avoiding catastrophic damage to the component that is moving, and to the system or vehicle where the actuator is mounted.

The single drive actuation system is composed by a linear electromechanical actuator that is integrated into the kinematical chain that governs the movement of the parts to be moved. Usually the parts to be moved need at least two actuators with a torque and synchrony shaft between them. The single drive actuation system allows the total elimination of torque shaft, but new redundancy and safety load path concepts are required.

The single drive system object of the present patent invention is composed by an actuator made up of different subsystems:
- A hollow roller screw: Its rotation makes the nut to advance or to go back.
- Coaxial safety bar: Linked to the screw in the free extreme, can fix the screw axially and rotationally by the safety device.
- A redundant nut made up of a roller nut and a safety nut.
- No-back device: Block the actuator when a load on the nut tries to drive it.
- Torque limiter: Avoid possible damages caused by motor(s) overloads.
- Two motors: Drive the actuator sharing the power. If necessary a single motor can drive the actuator at low speeds.
- Two position sensors: That only rotates a single revolution during the entire stroke, therefore always control the exact position of the actuator.
- Two mechanical stops: Limit the nut stroke, and avoid damaging crashes.
- Safety device: Acts over the coaxial safety bar. Two different missions integrated in a single device. First, to act as a secondary bearing system. Second, to act as a safety brake for the actuator.
- Main bearing system: Support the screw.
- Support: Support all the components, and connect the actuator to the parts to be moved.

Inside the hollow screw, an integral safety coaxial bar is introduced. This safety bar will only be stressed during failure conditions. The screw is linked to the safety bar in the free edge by a pin, and the fixed edge is linked to the safety device. The activation of the safety device will stop the rotation of the safety bar and so forth the roller screw in case of failure.

The junction between the safety bar and the screw is integrated with the extreme mechanical stop. The mechanical stop is an elastic limit, which will reduce drastically the forces generated in a hypothetical crash between the nut and the stop.

The nut assembly is mainly made up of two elements: the roller nut and the safety lead nut. All the elements that are part of the nut are fixed in rotation, which means that the safety nut can not rotate in relation to the roller nut (due to the key). The safety nut does not have any axial contact with any other element in the nut (due to the gaps on both sides of the safety nut), which means that the safety nut and the roller nut could have a relative axial movement between them. The relative axial position of both nuts is defined by the impossibility of a relative rotation between them and its placement in the screw.

In normal conditions the gap between the roller nut and the safety nut will be kept. In this situation the safety nut will not support any axial load; therefore the resistive (friction) torque that would apply in the screw will be minimum, and consequently also the wear.

If the roller nut fails two possibilities could happen:
- The roller nut blocks itself, therefore the part to be moved will be also blocked but never free.
- The roller nut becomes free, therefore the gaps that separate roller and safety nut will disappear and the axial load will be supported by the safety nut.

In degraded conditions, the safety nut retains the part to be moved axially and its thread makes possible to get the part to be moved safely to a secure position.

The no back device function, is to block the actuator when is exposed to any external load without the use of any active brake. It shall allow the motors to drive the actuator with a minimum detriment of the mechanical efficiency, and indirectly with a minimum wear and maintenance.

Mainly the no-back device has three elements: An external ring that is fixed to the support, an input shaft, and an output shaft. Between the external ring and the output shaft a set of rollers with a pre-compressed spring is placed. When a torque is applied in the output shaft, it is blocked against the external ring due to the rollers which can not roll (this effect is a consequence of the slope angles and friction).

When a torque is applied in the input shaft, the small gap between the torque pin and its hole, allows the input shaft to move a small angle without transmitting its movement to the output shaft. This small movement is enough to allow the unlocking pins to unlock the rollers, and consequently the input shaft could drag the output shaft.

The torque limiter objective is to protect the mechanical components if an unlikely motor(s) overload happen. The motors engage the input gear. The no-back gear engages the output gear. Input gear and output gear are fixed together due to a set of balls that engages in a set of slots in the output gear. This fixation is assured by a nut and elastic washers which preload the balls against the slots.
If the torque applied by the motor(s) to the input gear is too high, the balls will jump from their slots disconnecting the output and input gear. This disconnection will last until the balls find the next slots. A small gear assembled with the output gear will be always fixed to it, and consequently to the screw. This small gear will drive the actuator position sensors. Two gear headed motors will drive the actuator. Both motor will work together (half power) during normal conditions. If one (or its electronics) fails the other will drive the actuator at low speed.

Two sensors will control the actuator position. Each sensor will have attached an associated gear head in order to transform the actuator stroke into a single revolution. The gear heads associated to the sensors will have and infinite life since they are not going to transmit any power.

The safety device objective is to prevent the part to be moved could be free (without control). Consequently the safety device should prevent the following failures:
- Main bearing system failure that implies that the screw is axially free.
- Screw rupture that implies that the screw is axially free.
- No-back device failure, that implies that the screw is rotationally free, and so forth the nut is axially free.

Therefore the safety device shall support axially and rotationally the actuator. This double function will be done due to the safety bar linked to the screw in the free extreme. The safety device will be placed in the other extreme controlling the safety bar.

A needle axial bearing is mounted on the fixation plate. A disk is placed in the safety bar; this disk is fixed to the safety bar by a key only in rotation. A nut holds the disk in its position. Another needle axial bearing is fitted in the other disk face.

This assembly shall be performed in such a way the disk will have a gap between it and the nut (in one of the disk faces) and another gap between it and the safety bar elbow (in the other disk face). In this situation the safety bar will not support any axial load until a failure happen in other actuator element (screw rupture for example). When a failure happens, one of the gaps is lost (depending on the load direction) since the safety bar (not the disk) moves axially. When the gap is lost the safety bar touch the disk and this transmits the entire axial load to the support through the fixation plate. According to this assembly the safety device will support axially and passively the actuator.

Since the disk and the safety bar are rotationally fixed by a key, the disk will rotate with the safety bar, which will also rotate with the screw. Consequently if the disk could be rotationally blocked also would be the screw and therefore the nut linear advance.

The safety device assembly is made up of different elements: flexural arms, connection arms, action lever, and a brush motor.

In open position the flexural arms do not touch the disk, and consequently do not block nor interact with it. The open position can be maintenance without any external power consumption. If necessary the device can be activated. In this situation the control will feed the brush motor with a DC current in open loop (no control needed). The motor will force the action lever to rotate, and therefore the connection and flexural arms to move. This movement will not offer any resistance to the motor until the flexural arms touch the disk. After this, the motor will continue moving applying a torque and indirectly bending the flexural arms, which will react against the disk with an important normal reaction. This normal reaction in conjunction with a good friction coefficient will block the disk.

The motor will rotate the action lever until the system stops blocking itself in the close position. This position is auto-stable, which means that the device not need any external load in order to still being blocked. Consequently the brush motor only need to be feed with a DC current during some milliseconds when it is desired to pass from open to close, and from close to open.

The control system includes all the devices used to control the electromechanical actuator, the main are:
- Controller. An electronic control unit that controls all the electrical devices.
- Power electronics driver. This device drives a brushless motor.
- Sensors electronics. These electronics captures and processes all the sensors signals and adapts them to be used by other devices.
- Power supply adapters. Devices that modify the electric power supplied by a power source to be used for the devices of the control system.

The brushless motor above mentioned is part of the mechanical system. There will be two motors which work over the same actuator. These motors are redundant. Each motor has a power electronics driver for their control and this power electronics driver is not redundant.

As a high safety critical system is required, the control architecture selected is two actuator controllers with a double channel interface. In this case, all available safety measures are provided. This configuration will be suitable on board worthy installation. However, it is necessary that the communication with the Auxiliary Control Unit (ACU) will be through a double channel interface.

The ACU communicates with both controllers. With the analysis of the data of both controllers, the ACU chooses the controller that controls the system; therefore, the ACU manages the controllers. The selector receives a signal from the ACU, which indicates which controller is the main controller of the system.

The main advantage of this control system is the robustness by means of the controllers' redundancy. When a controller fails, the other controller takes over. In addition, the double channel interface makes the system more robust too. When a channel fails, the other will take over. And last but no least, an external device chooses the controller that controls.

### Brief description of the drawings.

In the following paragraphs a brief description of the drawings are described in order to understand better the invention and that are related exclusively with a realization of the mentioned patent that are presented as an example no limitative to this.
- The figure 1 is a view of the assembly of the actuation system with redundancies and safety device, object of the present patent invention.
- The figure 2 is the coaxial safety bar.
- The figure 3 is a detailed view and in section of the main bearing system.
- The figure 4 is a detailed view of the no-back device.
- The figure 5 is a detailed view of the redundant nut.
- The figure 6 is a detailed view of the hollow roller screw.
- The figure 7 is a detailed view of the safety device.
- The figure 8 is a detailed view of the system support object of the present patent invention.
- The figure 9 is a detailed view of the torque limiter.
- The figure 10 is a detailed view of the two motors of the system of the present patent invention.
- The figure 11 is a detailed view of the two position sensors.

### Preferential realisation of the invention.

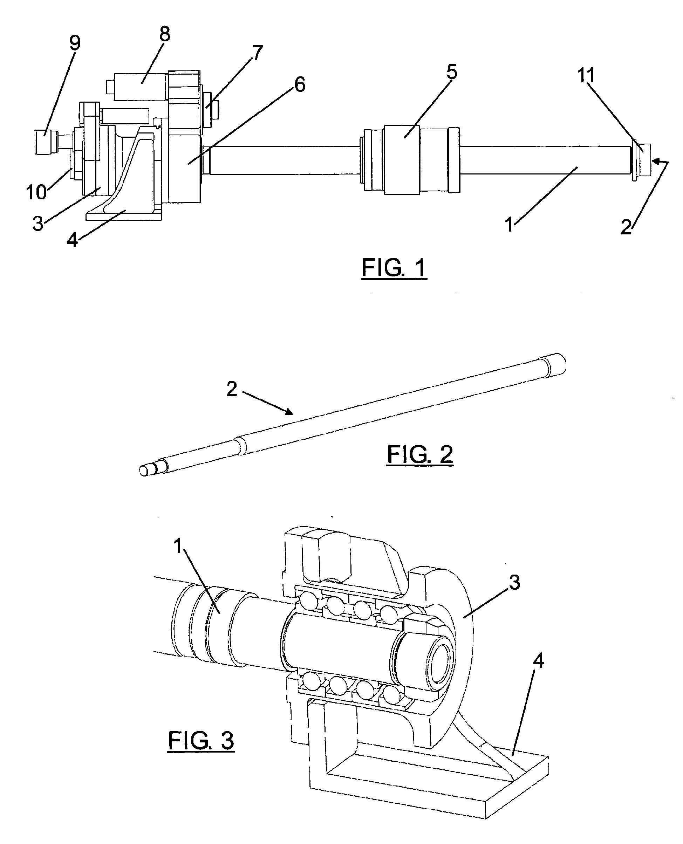

As it can be observed in the attached figures, the single actuation system with redundancies and safety device, object of the present patent invention is composed of (figure 1):
- A hollow roller screw [1].
- A coaxial safety bar [2], located inside the hollow roller screw [1] and connected to this in the free edge of the same.
- A redundant nut [5] located in the assembly formed by the screw [1] and the safety bar [2].
- A no-back device [6] located on one edge of the assembly screw [1] - safety bar [2].
- A torque limiter [7], located on the bottom part of the no-back device [6].
- At least two motors [8].
- At least two position sensors [9].
- A safety device [10] jointed solidaritily to the coaxial safety bar [2].
- A main bearing system [3], jointed solidaritily to the screw [1].
- A support [4] of the assembly, joint as well to the actuation system as to the element to be actuated.

The screw [1] is fixed to the free edge by a pin, whereas the fixed edge is linked to the safety device [10]. The joint of the safety bar [2] and the screw [1] is integrated with the extreme mechanical stop [11].

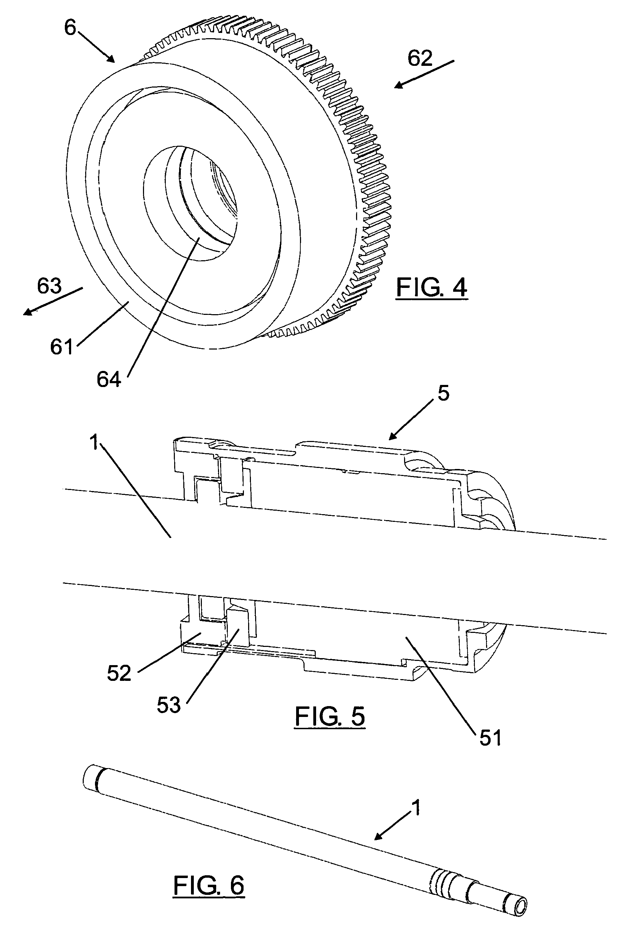

The redundant nut assembly [5], as observed in the figure 5, is mainly made up of two elements: the roller nut [51] and the safety nut [52], where the safety nut [52] has gaps [53] on both sides of the safety nut.

The no-back device [6], as observed in the figure 4, is made up of three elements, an external ring [61] that is fixed to the support, an input shaft [62], and an output shaft [63]. Between the external ring [61] and the output shaft [63] a set of rollers with a pre-compressed spring [64] is placed.

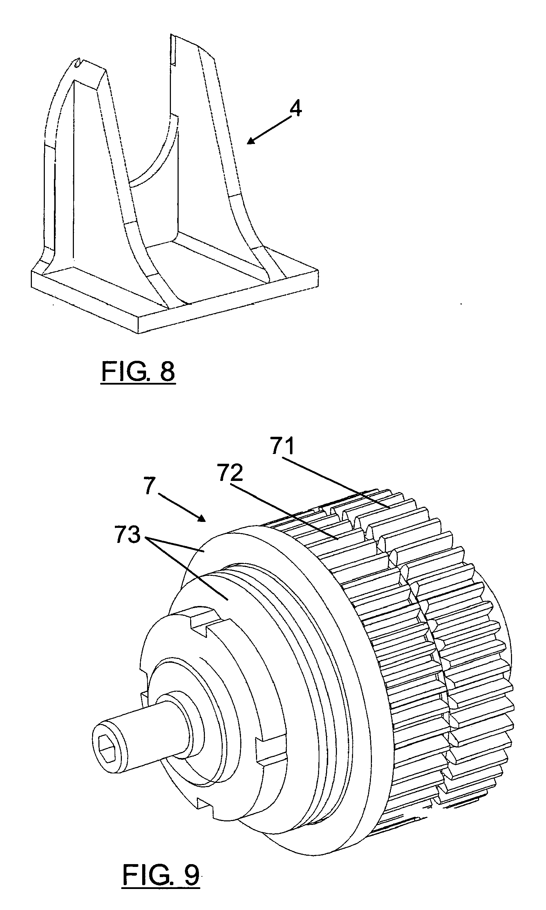

The torque limiter [7], as observed in the figure 9, is made up of an input gear [71] connected to the motors [8] and to the output gear [72] connected to the no-back device [6]; the fixation between the input gear [71] and the output gear [72] is assured by a nut and elastic washers [73] which preload the balls against the slots.

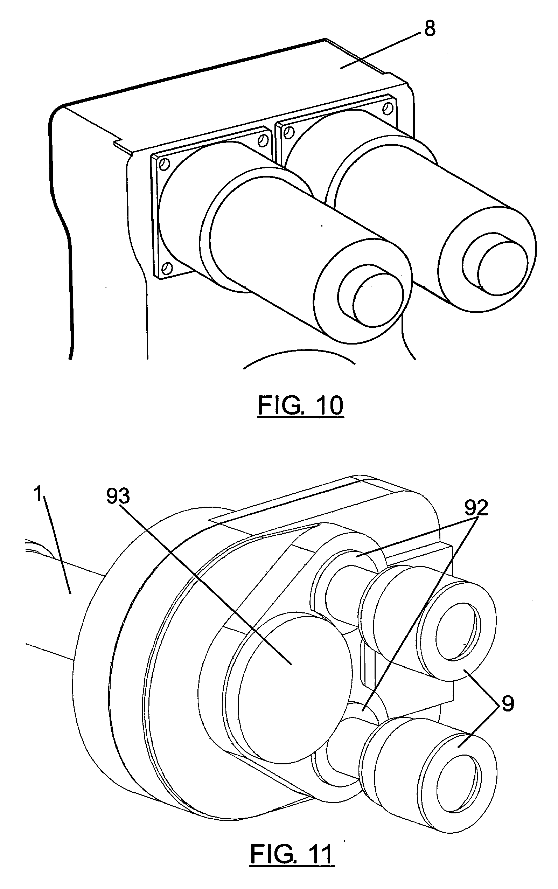

As indicated in the figure 10, the two motors [8] are engaged to the input gear [71] of the torque limiter [7]. In the figure 11, the two position sensors [9] are showed, where each of them have attached an associated gear head [92] that is engaged with a gear [93] fixed to the screw [1].

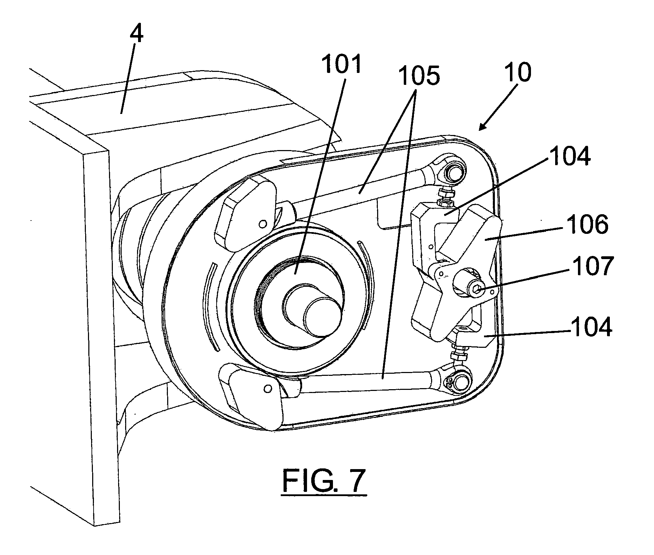

In the figure 7 it is showed the detail and section of the safety device [10]. The safety device assembly is made up of different elements: A needle axial bearing [101], two flexural arms [104], two connection arms [105], an action lever [106], and a brush motor [107].

In the figure 3 it can be showed the detail and section of the main bearing system [3], joint solidaritily to the screw [1]. In the figure 8 it is showed the detail of the support (4) of the assembly object of the present patent invention.

Having sufficiently described the nature of the present invention, as well as the form to carry through, the only point to add is that the invention may suffer certain variations in form and materials, always than those alterations do not modify essentially the characteristics that are claimed next.

## Claims

1. Single actuation system with redundancies and safety device, **characterized** because is made up of:
- A hollow roller screw [1];
- A coaxial safety bar [2], located inside the hollow roller screw [1] and connected to this in the free edge of the same;
- A redundant nut [5] located in the assembly formed by the screw [1] and the safety bar [2];
- A no-back device [6] located on one edge of the assembly screw [1] - safety bar [2];
- A torque limiter [7], located on the bottom part of the no-back device [6];
- At least two motors [8];
- At least two position sensors [9];
- A safety device [10] jointed solidaritily to the coaxial safety bar [2];
- A main bearing system [3], jointed solidaritily to the screw [1];
- A support [4] of the assembly, joint as well to the actuation system as to the element to be actuated;

2. Single actuation system with redundancies and safety device, as claim 1, **characterized** because the screw [1] is fixed to the coaxial safety bar [2] by a pin in one of its edges, whereas the other one is fixed to the safety device [10].

3. Single actuation system with redundancies and safety device, as previous clams, **characterized** because the joint of the safety bar [2] and the screw [1] is integrated with the extreme mechanical stop [11].

4. Single actuation system with redundancies and safety device, as the first claim, **characterized** because the redundant nut [5] assembly is made up of, at least, two elements:
- the roller nut [51],
- and the safety nut [52], that has gaps [53] in both sides of the safety nut.

5. Single actuation system with redundancies and safety device, as the first claim, **characterized** because the no-back device [6], is made up of, at least, three elements:
- an external ring [61] fixed to the support,
- an input shaft [62] and,
- an output shaft [63];
Where between the external ring [61] and the output shaft [63] a set of rollers with a pre-compressed spring [64] is placed.

6. Single actuation system with redundancies and safety device, as the first claim, **characterized** because the torque limiter [7] is made up of an input gear [71] connected to the motors [8] and an output gear [72] connected to the no-back device [6]; and where the fixation between the input gear [71] and the output gear [72] is assured by elastic washers [73].

7. Single actuation system with redundancies and safety device, as the first claim, **characterized** because the two motors [8] are joint to the input gear [71] of the torque limiter [7].

8. Single actuation system with redundancies and safety device, as the first claim, **characterized** because the position sensors [9] where each of them have attached an associated gear head [92] that is engaged with a gear [93] fixed to the screw [1].

9. Single actuation system with redundancies and safety device, as the first claim, **characterized** because the safety device [10] is made up of a needle axial bearing [101], two flexural arms [104], two connection arms [105], an action lever [106], and a brush motor [107].
